(19) Europäisches Patentamt

European Patent Office

Office européen des brevets

(11) **EP 0 812 678 B1**

(12) **EUROPEAN PATENT SPECIFICATION**

(45) Date of publication and mention
of the grant of the patent:
**02.03.2005 Bulletin 2005/09**

(51) Int Cl.$^7$: **B32B 17/10**, C03C 27/12,
C03C 4/00, C03C 3/087,
B60B 1/00

(21) Application number: **97303670.0**

(22) Date of filing: **02.06.1997**

(54) **Vehicle glazings**

Verbundglasscheiben für Fahrzeuge

Vitrage pour véhicules

(84) Designated Contracting States:
**BE DE ES FI FR GB IT LU NL PT SE**

(30) Priority: **11.06.1996 GB 9612159**

(43) Date of publication of application:
**17.12.1997 Bulletin 1997/51**

(73) Proprietor: **Pilkington Automotive Limited
St Helens Merseyside WA10 3TT (GB)**

(72) Inventor: **Frost, Mark Robert
Chorley, Lancashire PR7 5QG (GB)**

(74) Representative: **Halliwell, Anthony Charles et al
Pilkington plc,
Group Patents Department,
Pilkington Technology Centre,
Hall Lane,
Lathom
Ormskirk, Lancashire L40 5UF (GB)**

(56) References cited:
**EP-A- 0 536 049        EP-A- 0 644 164**

EP 0 812 678 B1

**Description**

This invention relates to vehicle glazings, and in particular to laminated glazings for motor vehicles.

It is known to reduce the solar heat gain through vehicle windows by incorporating iron in the glass to provide a "solar control" glazing. This use of iron not only reduces the solar heat gain, reducing the tendency of the passenger compartment to overheat in the sun, but imparts a green tint to the glass and reduces the transmission of visible light.

Solar control glazings have been used in motor vehicles for many years. Monolithic toughened side and rear glazings have been produced in 4 mm and 5 mm thicknesses incorporating appropriate amounts of iron to provide the required properties. As front side glazings are required, under European law, to have a visible light transmission of at least 70%, the amount of iron which could be incorporated (and hence the solar control effect) has been limited. More recently, it has been proposed to produce solar control glazings in 3 mm glass for use as front side windows, and glass compositions (appropriately modified in accordance with the Beer Lambert law to provide the transmission properties previously known for 4 and 5 mm glasses) have been put forward.

We have now realised that such compositions, which generally exhibit a visible light transmission in the range 70 to 74% in 3 mm thickness can also be used, without modification, in the form of thinner panes to laminate to clear glass panes to produce laminated glazing meeting European light transmission requirements for windshields, i.e. a visible light transmission of at least 75%. Thus laminated vehicle windows of normal thickness can be produced with good solar control properties, but meeting the European standards for vehicle glazings, without needing to produce an additional special glass composition for the purpose.

According to the present invention there is provided a laminated vehicle glazing comprising a first pane of glass and a second pane of glass laminated together by an interlayer ply therebetween, the first pane of glass is of a composition containing iron and has, in 3 mm thickness, a visible light transmission in the range from 70 to 74 %, characterised in that the glazing is a vehicle windscreen, the first pane of glass is provided in a thickness less than 3 mm, and the second pane of glass is clear glass, the glazing thereby having a visible light transmission of at least 75 %.

The first pane preferably has a thickness in the range $2.1 \pm 0.2$ mm.

The expression "visible light transmission" used in the present specification and claims refers to the transmission of CIE Illuminant A with 1931 2° observer over the wavelength range 380 -780 nm integrated from measurements at 10 nm intervals in accordance with ASTM E308-90. The expression "direct solar heat transmission" (DSHT) refers to the proportion of incident solar energy transmitted directly through the glass and uses a set of weighting factors equal to air mass 2 direct detailed in ISO 9050 representing the power distribution of average sunlight between 350 and 2100 nm in 50 nm intervals.

The expression "ultra violet transmission" (UV) refers to the proportion of incident solar energy transmitted through the glass calculated by rectangular integration using the weighting factors devised by Parry Moon in 1940 over the spectral range 300 to 400 nm in 10 nm intervals.

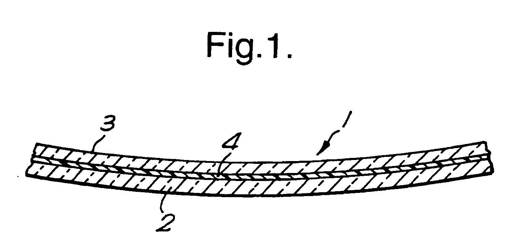

The invention is further explained below and illustrated by the accompanying schematic drawing which shows, by way of example, a section through one preferred embodiment. Referring to the drawing, a laminated vehicle windshield, generally designated 1, comprises a curved outer pane 2 of iron containing solar control glass and a matching inner pane 3 of clear glass bonded to the outer pane by a plastics interlayer 4, for example polyvinylbutyral.

The solar control glass will normally have a total iron content (calculated as ferric oxide) of at least 0.95% by weight, with a ratio of ferrous iron to total iron in the range 0.22 to 0.32, in order to provide the required light transmission and beneficial solar control properties in 3 mm thickness. References to the ratio of ferrous iron to total iron in the present specification and claims are reference to ratios determined optically and given by the following formula, in which $T_{1000 \, nm}$ is the percentage transmission of radiation of wavelength 1000 nm through a sample of glass L mm thick, and $Fe_2O_3$ is the total iron content of the glass (calculated as ferric oxide) as the percentage by weight.

$$\text{Ratio ferrous iron/total iron} = \frac{[\log_{10}(\frac{100}{T_{1000 \, nm}}) - 0.036] \, 1.152}{L \times Fe_2O_3}$$

The resultant value represents the proportion of the iron content which is present in the ferrous (as opposed to ferric) state.

Typical glass compositions for use in the present invention comprise 0.95% to 1.2% total iron (calculated as ferric oxide), preferably 1.0 to 1.15%, for example:

| $SiO_2$ | 66-75 | $K_2O$ | 0-5 | $B_2O_3$ | 0-5 |
|---|---|---|---|---|---|
| $Al_2O_3$ | 0-5 | MgO | 0-5 | BaO | 0-5 |

(continued)

| Na$_2$O | 10-20 | CaO | 5-15 | TiO$_2$ | 0-1 |
|---|---|---|---|---|---|
| +Fe$_2$O$_3$ | 0.95-1.2 | | | | |

all in percent by weight.

The inner pane of clear float glass (which commonly contains small amounts, e.g. 0.1% of iron as impurity, and has a visible light transmission of 89% or more in 2 mm thickness) will normally have a thickness in the range 1.5 to 2.5 mm, preferably 1.8 to 2.3 mm.

Examples

A 3.0 mm iron containing solar control glass produced for use in sidelights and backlights had a visible light transmission of 71.6%, a direct solar heat transmission of 45.2%, an ultra violet transmission of 38.0% and the following composition, in parts by weight:

| SiO$_2$ | 71.9 | CaO | 8.26 | As$_2$O$_3$ | <0.01 |
|---|---|---|---|---|---|
| Al$_2$O$_3$ | 0.56 | TiO$_2$ | 0.04 | Cl | 116 ppm |
| Na$_2$O | 13.7 | ZrO$_2$ | 0.02 | Co$_3$O$_4$ | 4 ppm |
| K$_2$O | 0.30 | Fe$_2$O$_3$ (total iron, calculated as ferric oxide) | 1.09 | | |
| MgO | 3.94 | SO$_3$ | 0.145 | | |

The titanium, zirconium, arsenic and chlorine are present in the batch as impurities. SO$_3$ results from sodium sulphate included in the batch as a refining agent. The small amount of cobalt present results from inclusion as a colour modifier.

The same glass composition was produced in 2.1 mm thickness and a pane of the 2.1 mm solar control glass, cut to size for a windshield, together with a matching pane of 2.1 mm clear float glass, were bent as a pair in a furnace with the solar control glass below the clear glass for use as the outside pane of the laminate. After bending, the panes were laminated together with a 0.76 mm thick interlayer of polyvinylbutyral. The resulting laminate had a light transmission of 76.1% and a direct solar heat transmission (DSHT) of 51.2%.

The optical properties of corresponding laminates produced using clear float inner panes 1.5 mm thick and 2.5 mm thick respectively were calculated as:

| Clear inner pane | Visible Light transmission | DSHT | UV |
|---|---|---|---|
| 1.5 mm | 76.4% | 51.8% | 23.9% |
| 2.5 mm | 76.0% | 50.9% | 23.7% |

Thus, it may be seen that, by using one solar control pane and one clear pane, it is possible to change the thickness of the window (by changing the thickness of the clear pane) and hence its weight, without significantly varying the light transmission or solar control properties.

Increasing the iron content in the solar control glass (while maintaining the proportion of the iron present in the ferrous state, i.e. the ratio of ferrous iron to total iron, constant) to 1.21% will reduce the light transmission of the 3 mm pane to about 70.0%, while reducing the iron content (while maintaining the proportion of the iron present in the ferrous state constant) to 1.04% will increase the light transmission of the 3 mm pane to about 74.0%.

The light transmission and direct solar heat transmission of laminated windshields combining 1.9 mm and 2.3 mm outer panes of each of the above compositions with 2.1 mm clear float inner panes are set out in the following table:

| Iron content of glass % iron, calculated as ferric oxide | Thickness of outer pane, mm | Visible Light transmission % | DSHT % | UV % |
|---|---|---|---|---|
| 1.04 | 1.9 | 79.0 | 55.1 | 25.8 |
| 1.04 | 2.3 | 76.8 | 51.0 | 24.5 |
| 1.21 | 1.9 | 76.3 | 51.4 | 23.9 |
| 1.21 | 2.3 | 73.6 | 47.0 | 22.4 |

The fourth combination has too low a light transmission for use as a windscreen in accordance with European Union legislation, but reducing the thickness of the solar control pane to less than about 2.1 mm will increase the visible light transmission to the required 75% level.

Thus, it is seen that use of the present invention permits the production of laminated vehicle glazings having light transmission meeting European Union legal requirements (a light transmission of at least 75%) but having a relatively low heat transmission utilising a known glass composition required for other purposes and without the need to melt a special glass composition.

It is preferred to use the iron containing solar control glass pane as the outer pane of the laminate with the clear glass pane as the inner pane. Not only does this give advantages over the reverse arrangement (clear float outer, iron containing solar control inner), it gives significant advantages over the common use of solar control glass (albeit containing less iron) for both inner and outer.

By concentrating the iron (which acts by absorbing heat into the glass) in the outer pane, the heat absorption of the laminate in use is concentrated in the outer pane with the outside of the laminated window, when exposed to the sun on a hot day, becoming warmer than the inside. This increases the rate of heat loss by conduction and convection from the outside of the window into the atmosphere, while reducing the rate of heat gain by conduction and convection from the window to the inside of the vehicle.

A further advantage of the invention is that, when the glasses are bent in pairs, problems resulting from the upper, inner glass (which is nearer to the radiation heaters in the bending furnace) becoming significantly hotter than the lower, outer glass, are avoided (since the lower, outer pane - rather than the inner, upper pane - is the more strongly absorbing).

**Claims**

1.    A laminated vehicle glazing comprising a first pane of glass and a second pane of glass laminated together by a plastics interlayer ply therebetween, the first pane of glass is of a composition containing iron and has, in 3 mm thickness, a visible light transmission (measured with CIE Illuminant A) in the range from 70 to 74 %,
**characterised in that** the glazing is a vehicle windscreen, the first pane of glass is provided in a thickness less than 3 mm, and the second pane of glass is clear glass, the glazing thereby having a visible light transmission (CIE Illuminant A) of at least 75 %.

2.    A laminated vehicle glazing as claimed in claim 1 wherein the first pane has a thickness in the range $2.1 \pm 0.2$ mm.

3.    A laminated vehicle glazing as claimed in claim 1 wherein said first pane is of a glass composition containing at least 0.95 % by weight of total iron (calculated as ferric oxide).

4.    A laminated vehicle glazing as claimed in any of the preceding claims wherein the second pane has a thickness in the range 1.5 mm to 2.5 mm.

5.    A laminated vehicle glazing as claimed in any of the preceding claims wherein the first pane is the outer pane and the second pane is the inner pane.

6.    A laminated vehicle glazing as claimed in any of the preceding claims being a windshield for a motor vehicle.

7.    A method of manufacturing a laminated vehicle glazing as claimed in claim 5 wherein the first and second panes are bent as a pair with the scone pane on top of the first pane, and laminated together after bending.

**Patentansprüche**

1.    Laminierte Fahrzeugverglasung, die eine erste Glasscheibe und eine zweite Glasscheibe, die durch eine dazwischen liegende Kunststoff-Zwischenschicht zusammenlaminiert sind, aufweist, wobei die erste Glasscheibe aus einer Zusammensetzung ist, die Eisen enthält und bei einer Dicke von 3 mm eine Durchlässigkeit für sichtbares Licht (gemessen mit dem CIE Illuminant A) im Bereich von 70 bis 74% aufweist,
**dadurch gekennzeichnet, dass** die Verglasung eine Fahrzeugwindschutzscheibe ist, die erste Glasscheibe mit einer Dicke von weniger als 3 mm bereitgestellt wird und die zweite Glasscheibe aus klarem Glas ist, wodurch die Verglasung eine Durchlässigkeit für sichtbares Licht (CIE Illuminant A) von wenigstens 75% aufweist.

**2.** Laminierte Fahrzeugverglasung nach Anspruch 1, bei der die erste Scheibe eine Dicke im Bereich von $2,1 \pm 0,2$ mm aufweist.

**3.** Laminierte Fahrzeugverglasung nach Anspruch 1, bei der die erste Scheibe aus einer Glaszusammensetzung ist, die wenigstens 0,95 Gewichts-% an Gesamteisen (berechnet als Eisen(III)oxid) enthält.

**4.** Laminierte Fahrzeugverglasung nach einem der vorigen Ansprüche, bei der die zweite Scheibe eine Dicke im Bereich von 1,5 mm bis 2,5 mm aufweist.

**5.** Laminierte Fahrzeugverglasung nach einem der vorigen Ansprüche, bei der die erste Scheibe die äußere Scheibe und die zweite Scheibe die innere Scheibe ist.

**6.** Laminierte Fahrzeugverglasung nach einem der vorigen Ansprüche, die eine Windschutzscheibe für ein Motorfahrzeug ist.

**7.** Verfahren zur Herstellung einer laminierten Fahrzeugverglasung nach Anspruch 5, bei dem die erste und zweite Scheibe als Paar gebogen werden, wobei sich die zweite Scheibe oben auf der ersten Scheibe befindet und die Scheiben nach dem Biegen zusammenlaminiert werden.

**Revendications**

**1.** Vitrage feuilleté pour véhicule comportant un premier panneau de verre et un second panneau de verre feuilletés ensemble avec une couche intermédiaire de matière plastique entre eux, le premier panneau de verre étant d'une composition contenant du fer et ayant, en une épaisseur de 3 mm, une transmission de la lumière visible (mesurée conformément à l'Illuminant CIE A) dans la plage de 70 à 74 %,
**caractérisé en ce que** le vitrage est un pare-brise de véhicule, le premier panneau de verre est produit en une épaisseur inférieure à 3 mm et le second panneau de verre est du verre clair, le vitrage ayant ainsi une transmission de la lumière visible (Illuminant CIE A) d'au moins 75 %.

**2.** Vitrage feuilleté pour véhicule selon la revendication 1, dans lequel le premier panneau a une épaisseur dans la plage de $2,1 \pm 0,2$ mm.

**3.** Vitrage feuilleté pour véhicule selon la revendication 1, dans lequel le premier panneau est en une composition de verre contenant au moins 0,95 % en poids de fer total (calculé sous la forme d'oxyde ferrique).

**4.** Vitrage feuilleté pour véhicule selon l'une quelconque des revendications précédentes, dans lequel le second panneau a une épaisseur dans la plage de 1,5 mm à 2,5 mm.

**5.** Vitrage feuilleté pour véhicule selon l'une quelconque des revendications précédentes, dans lequel le premier panneau est le panneau extérieur et le second panneau est le panneau intérieur.

**6.** Vitrage feuilleté pour véhicule selon l'une quelconque des revendications précédentes, qui est un pare-brise pour un véhicule à moteur.

**7.** Procédé de fabrication d'un vitrage feuilleté pour véhicule selon la revendication 5, dans lequel les premier et second panneaux sont cintrés en formant une paire avec le second panneau sur le dessus du premier panneau, et sont feuilletés ensemble après le cintrage.

# Fig.1.